# EUROPEAN PATENT APPLICATION

(11) **EP 2 933 764 A1**
(43) Date of publication of application: **21.10.2015**
(21) Application number: 15163744.4
(22) Date of filing: 15.04.2015
(51) Int. Cl.: G06Q 10/08

(54) **SHIP PERFORMANCE ANALYSIS AND LOG MANAGEMENT**

(30) Priority: 15.04.2014 IN CH19452014
(71) Applicant: Luljeta Ltd., 408868 Vertex (SG)
(72) Inventor: Unni, Rajesh, 600086 Chennai (IN); Hariharaputhran, Swaminathan, 600028 Chennai (IN); Kar, Gautam, 603103 Chennai (IN); Volety, Shivram, 600041 Chennai (IN); Hariharakumar, Sivakumar Kattumpurath, 682013 Kerala (IN); George, Sunil, 686730 Kerala (IN); Balakrishnan, Sudeesh Kizhakkepurakkal, 680 503 Kerala (IN); Pillai, Sumesh Somasekharan, 695010 Kerala (IN)
(74) Representative: Carpmaels & Ransford LLP

(57) **Abstract**

A system for management of operations of one or more vessels is disclosed, comprising a land-based server coupled to one or more business databases, wherein the business databases comprises business data including financial data and inventory data, a vessel-based server coupled to one or more sensor modules configured to collect voyage related data; and a contextual engine coupled to the land-based server and the vessel-based server via a network. The contextual engine is configured to synchronize the voyage data and the business data, and produces a context specific management framework using the synchronized voyage data and the business data.

## Description

### FIELD OF THE INVENTION

The invention generally relates to a system for managing cargo ships and shipping fleets, and in particular to an integrated system including software for managing activities related to shipping, as well as operation of ships, other than the actual running or navigation of the ship.

### DESCRIPTION OF THE RELATED ART

Shipping management involves many stakeholders such as fleet owners, ship managers, charterers or customers and brokers, who need to remain in communication in order to effect smooth transport of goods and effective utilization of capacity. Each stakeholder has different requirements - for example, fleet owners would like to book capacity and schedule the movement of vessels efficiently in a planned manner. Customers would like to have information as to availability of space, scheduled departure of various sized vessels, unit cost, etc. in easily accessible format. Brokers are a special class of customer who would like to have access to vessel availability, schedules and costs so that they could offer customized logistic solutions at smaller scales, offering grouping of requirements from retail customers, etc. Ship operators and ship managers need to interact with owners and customers in real time to effectively meet their respective objectives as outlined above.

Operation of ships involves many processes such as operations management, technical management, financial management, etc. Operations management includes management of the voyage, dry docking and commercial activities, technical management may involve crewing, safety, security, repairs, purchasing and inventory, risk management etc. and financial management involves budget controls, multi-currency capabilities, integration with existing software packages, pool and disbursement management.

Other functional features desirable in a system for managing ships is the ability to maintain credentials such as safety certificates, personnel licenses, quality information etc. Another desirable feature is the automatic direction of tasks to responsible persons in a sequential or simultaneous manner, as the task may. There is a need for an integrated software package to provide all the above functions.

Existing software packages do not provide all the functions as described above and the user is forced to install more than one package from various providers that may or may not be compatible with each other. Such packages are disclosed in patent publications such as US20080147257A1 and US20100191565A1, or in software packages offered by entities such as ShipNet, Danas Information Services, etc.

The invention is directed to an integrated software package for management of shipping activities including operational, safety, technical and engineering and financial aspects of ship and fleet management, including robust data exchange between shore and ship that would meet the above needs.

### SUMMARY OF THE INVENTION

Described herein are systems and methods for management of operations of one or more vessels of a shipping fleet. In one embodiment, the system comprises a land-based server coupled to one or more business databases, wherein the business databases comprise business data including financial data and inventory data, a vessel-based server coupled to one or more sensor modules configured to collect voyage related data, and a contextual engine coupled to the land-based server and the vessel-based server via a network. The contextual engine is configured to synchronize the voyage data and the business data; and wherein the contextual engine is configured to produce a context specific management framework using the synchronized voyage data and the business data. The system may further comprise a regulation server coupled to one or more regulation databases comprising vessel regulation data, docking data and vessel certification data.

In one embodiment of the system the management framework is presented as a dashboard. The vessel-based and land-based servers of the system further comprise workflow-based modules for management of operations of a vessel including a quality, health, safety and environmental compliance module, a voyage management module, a crew management module, a purchase and inventory management module, and an administration module. The modules are configured to provide workflow based functions and communication through a network. In various embodiments, the communication is effected via a satellite network, a WIFI network, a mobile telephone network or a wired data network

In one embodiment the land-based server further comprises a finance module, a commercial and logistics module, a document management system, and a planned maintenance system, wherein the modules are configured for managing a fleet of vessels.

The quality, health, safety and environmental compliance module of the system is configured to perform functions comprising recording of accidents, scheduling and recording of audits, scheduling and reviewing of drills, scheduling and conducting investigations, including reviewing and implementing corrective actions thereafter, scheduling and communicating of meetings and capturing minutes thereof, scheduling of training, risk assessment and scenario analysis. The quality, health, safety and environmental compliance module is further configured to perform functions including generating reporting and communication corresponding to each function.

In one embodiment of the system the voyage module is configured to perform the functions of scheduling of voyages, logging of voyage details including ship's position, bunker details, garbage details and cargo details, reporting of bunker details, departures, noon reports and arrivals, and geo-location of one or more ships.

In one embodiment of the system the crew management module is configured to perform the functions of recording and maintaining a crew database, tracking of sign-on and sign-off dates of crew in the database, searching and retrieving crew availability data, maintenance of crew contract data, recording performance appraisal of crew, and administering a promotion system based on the appraisal. The crew management module may further comprise a training and repatriation module for follow up actions based on the appraisal data

In one embodiment of the system the purchase module comprises a shopping module configured to handle purchase requests, an inventory management module operable with the inventory database and an ordering module operable with a vendor database to send enquiries, receive offers and prepare comparative statements.

In one embodiment of the system the administration module further comprises a workflow engine configured to administer user privileges for authorizing transactions and approvals within the system, and to provide alerts for follow-up of incomplete tasks according to the workflow.

In one embodiment the system of the invention further comprises a mobile application configured to provide to a user voyage related details and alerts based on role of the user.

In one embodiment the invention is a computer program product with program code for management of operations of one or more vessels, comprising a contextual engine connected to a land-based server and a vessel-based server via a network, the land-based server coupled to one or more business databases wherein the business databases comprise business data including financial data and inventory data. The vessel-based server is coupled to one or more sensor modules configured to collect voyage related data. The contextual engine is configured to synchronize data between the land based server and the vessel-based server and to produce a context specific management framework using the synchronized voyage data and the business data. The computer program product may be referred to as a "computer readable medium" which may be any medium having stored thereon, or be capable of storing instructions, for use by or execution by a computer or other computing device/processor including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

In one aspect the computer program product of the invention further comprises workflow-based modules for management of operations of a vessel including a quality, health, safety and environmental compliance module, a voyage management module, a crew management module, a purchase and inventory management module and an administration module, wherein, the modules are configured to provide workflow based functions and communication through a network. The communication is effected via a satellite network, a WIFI network, a mobile telephone network or a wired data network.

### BRIEF DESCRIPTION OF THE DRAWINGS

The invention has other advantages and features which will be more readily apparent from the following detailed description of the invention and the appended claims, when taken in conjunction with the accompanying drawings, in which:
Figure 1 is a schematic diagram of the system of the invention.
Figure 2 illustrates the functional modules used in the system.
Figure 3 is a schematic showing the architecture of the system.
Figure 4 shows the workflow definitions used by the system.
Figure 5 is a diagram showing the communication protocol followed by the system.
Figure 6 shows the dashboard of an instance of the application.
Figure 7 is a screen showing vessel and voyage report list on a server instance.
Figure 8 shows a typical certificate database on a server instance of the system
Figure 9 illustrates the document repository associated with a server instance of the system.
Figure 10 is a screen illustrating work flow customization on the server instance of the system.
Figure 11 shows an example of the communication service log of the system.
Figure 12 shows a vessel instance of the system of the invention.

### DETAILED DESCRIPTION OF THE PREFERRED EMBODIMENTS

Although the detailed description contains many specifics, these should not be construed as limiting the scope of the invention but merely as illustrating different examples and aspects of the invention. It should be appreciated that the scope of the invention includes other embodiments not discussed herein. Various other modifications, changes and variations which will be apparent to those skilled in the art may be made in the arrangement, operation and details of the system and method of the present invention disclosed herein without departing from the spirit and scope of the invention as described here.

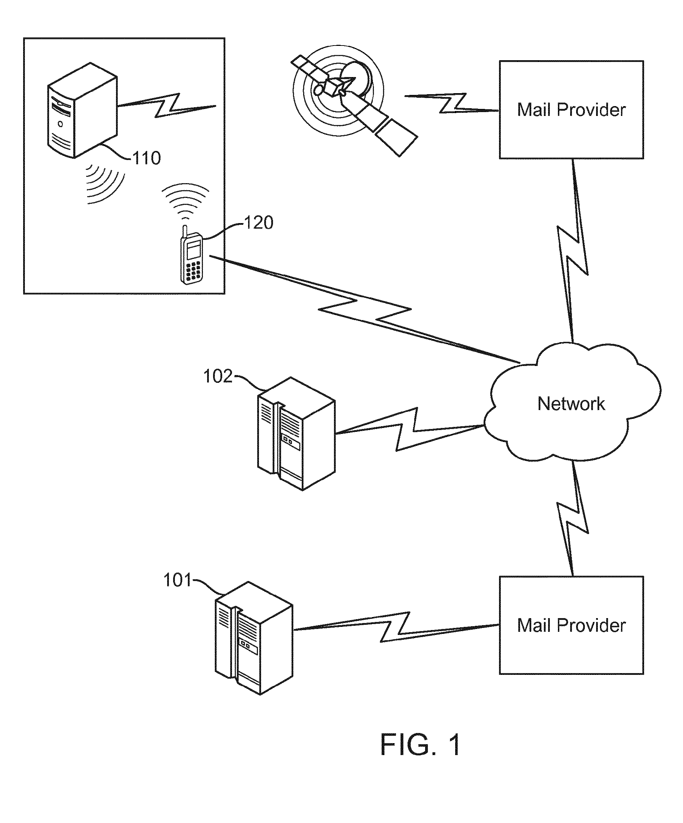

Embodiments of the present invention relate generally to a web-based product for handling office as well as on-board ship management activities. The framework for the various embodiments of the invention is the system illustrated in Fig. 1, where land-based server **101** is in communication with a ship-based server **110** connected through a network. The framework additionally comprises handheld device **120,** also connected to the network and/or directly to the server **110** as shown in Fig. 1. The connection between server **101** and server **110** may be facilitated by one or more intermediary agencies such as a mail provider, a satellite network provider or other communication network provider. In some embodiments the system of the invention provides a management framework presented to the user as a dashboard.

In one embodiment the central instance running on the land-based server **101** is coupled to voyage data from one or more sensors connected through a vessel **110** and one or more business databases including business data and financial data. The sensor data may comprise local time data, geolocation data such as longitude and latitude of the vessel's location, meteorological data including temperature, atmospheric pressure, precipitation, pressure change data, and so on. The business data may comprise financial data, unit cost data, personnel data, cargo data, bunkering data, schedule data including arrival and departure of vessels, weather data etc.

Additionally, server **101** may include various modules for providing information storage, analysis and retrieval such as a financial module, a technical module vessel maintenance data including vessel condition monitoring data, vessel registration information, vessel statutory reporting, vessel certification, dry docking, vessel efficiency / performance data and contingency plans. Additionally and optionally, a dedicated regulation server **102** may be located on land, for housing one or more regulation databases such as vessel regulation data, docking data and vessel certification data, as may be required. In various embodiments the land based server **101** is connected to the synchronized voyage data and the business data

In one embodiment of the invention, the system runs in multiple instances - a central instance at office on server **101** and an instance in each ship on the vessel-based server **110.** A mobile instance of the application is configured to run on handheld device **120.** The mobile instance on **120** is configured to receive updates comprising voyage related data and alerts from vessel based server **110** via a network, including a local network such as a WiFi based network. The system of the invention is configured to work either in online or offline mode, according to availability of networks. When working in the offline mode the system data is synchronized through the communication services, which send and receive the data as email.

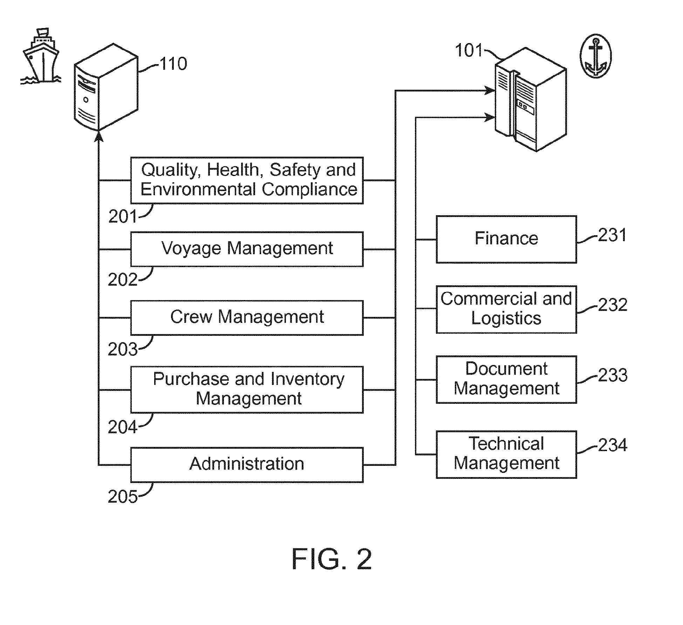

In one embodiment the instances of the vessel management system is made up of workflow-based modules for management of operations of a vessel, as shown in Fig. 2. The modules include a quality, health, safety and environmental compliance module **201,** a voyage management module **202,** a crew management module **203,** a purchase and inventory management module **204,** and an administration module **205.** As shown in Fig. 2, these modules are present in the system installed and running on both the vessel-based server **110** and the land-based server **101.** The land-based server **101** additionally is provided with module for finance management **231,** a commercial and logistics module **232,** a document management module **233** and a technical management module **234,** as illustrated in Fig. 2.

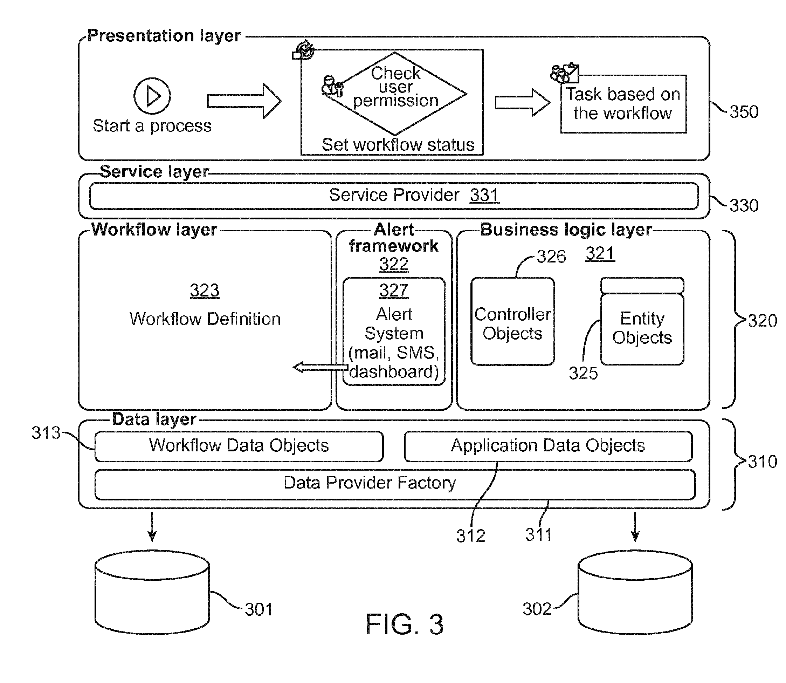

In one embodiment the architecture of the system of the invention is illustrated in Fig. 3. As shown in Fig. 3, the architecture of the system comprises a number of layers, with a data layer **310** at the lowest level, a workflow layer **320** at the next higher level, a service layer **330** above the workflow layer and a presentation layer **350** at the top level. As shown in detail in Fig. 3, the data layer **310** further comprises data provider factory **311,** application data objects **312** and workflow data objects **313.** The workflow layer **320** comprises a business logic layer **321,** an alert framework **322** and a workflow definition layer **323.** Service layer 330 comprises service provider **331.** At the highest level, the presentation layer **350** comprises logic for receiving a user input, checking user privileges and to initiate a task based on workflow.

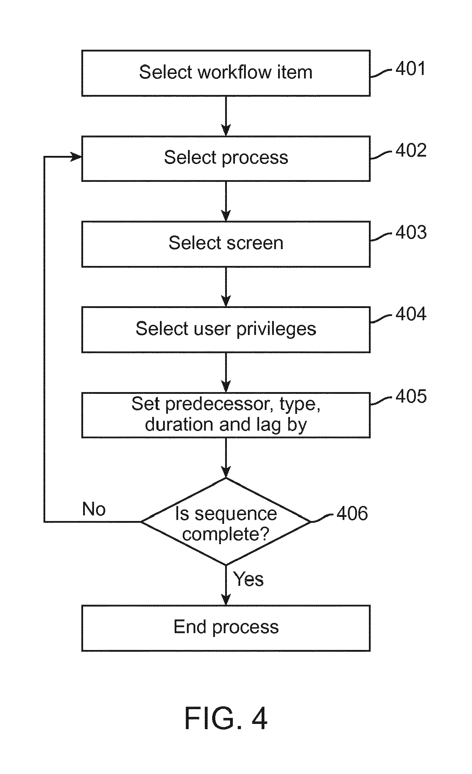

In one embodiment of the invention the modules of the system are configured to provide workflow based functions and communication for performing operations within the vessel and for vessel management, as illustrated in Fig. 4. The workflow definitions are shown in Fig. 4, where when a workflow item is selected or initiated (step **401**), the appropriate process in the sequence for the appropriate task is selected (step **402**) and the corresponding screen selected (step **403**) and user privileges are applied (step **404**). The process involves setting appropriate predecessor, type and duration, and lag time for the task (step **405**). Finally, the workflow definition logic identifies whether all the tasks associated with the workflow sequence are completed, and if not, proceeds with the cycle from step **402.** If the sequence is completed, then the process ends.

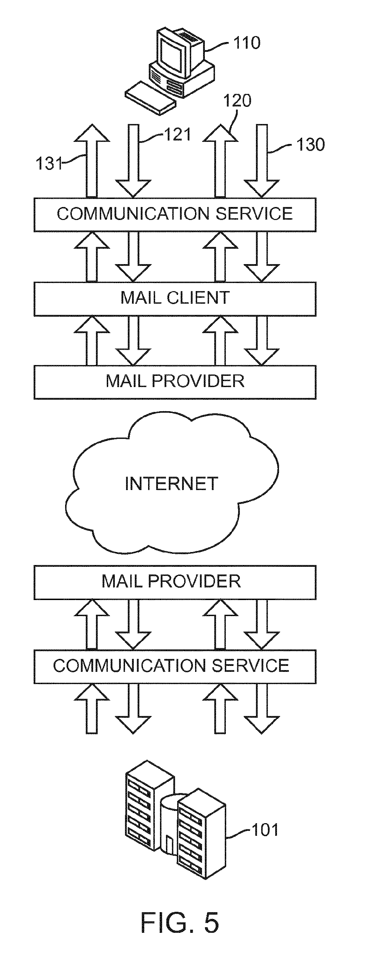

In one embodiment the invention comprises communication architecture as shown in Fig. 5. The land based server **101** and vessel-based server **110** perform the role of sending and receiving data in the form of emails. The communication service instances are configured to run in server **101** as well as in **110.** Whenever a data insertion or update request is initiated at the vessel based server **110,** the communication service running on server **110** creates a data file and saves the same as draft mail to mail client in the ship side. The mail client pushes the mail as data forward **130** through the mail provider when the satellite connection is established. The mail thus sent is forwarded to the destination mail address via internet, with corresponding update to the database on server **101.**

When the mail reaches the destination mail ID, such as server **101** for example, the communication service will read the data sent from the vessel and updates it in the database server at **101.** If the operation is completed successfully, an ACK signal or if unsuccessful, a NACK is sent back to the ship (operation **120**) which is received at the vessel-based server **110.** The communication service at server **110** downloads the message and updates receipt against the data file sent. If the data is sent from server **101,** the communication service similarly pushes data file generated via data forward **131** to the vessel's mail box. As with the communication from the vessel side, when synchronized the data file is downloaded and the ACK / NACK file is sent from server **110** to **101,** which is updated to the database on the server **101.**

In various embodiments illustrated with reference to Fig. 5, the communication system used by the system may comprise a satellite network, a WIFI network, a mobile telephone network or a wired data network, depending on the availability of the network and proximity to a service provider. The system of the invention is configured to efficiently manage the exchange of information while saving operational costs.

In one embodiment the quality, health, safety and environmental compliance module **201** is configured to perform several functions relating to safety such as recording of accidents, near-misses and injuries relating to ship operations. The module is further configured to generate incident reports when required and communicate to the appropriate user level. The module **201** further comprises an audit module for scheduling and conducting quality audits and safety audits. The audits may comprise investigation and analysis of incidents and non-conformances, including assignment of personnel, implementation and review of corrective actions for quality, safety or environmental compliance, as may be required. In one embodiment the system of the invention provides modules for scheduling and review of drills, with record of minutes underlining areas of improvement. The compliance module **201** is further configured to schedule and record minutes of meetings, including communications and follow up alerts on actions from minutes of meeting.

In one embodiment the system of the invention also provides a training module to cater to the various types of training that may be required in a ship or that could be provided on a land-based facility. The training scheduled may be in advance of anticipated requirement, or it could be in response to a review and suggested corrective actions, but in either case, may be minuted in meetings and recorded in the system as a training requirement. As earlier explained with reference to Fig. 2, the QHSE module **201** may include training as corrective action for maintaining quality, for health reasons, to comply with safety regulations or for environmental compliance. Additionally, training is also associated with the crew management module **203.**

In various embodiments the QHSE module of the system also includes comprehensive reporting and communications management functions so that schedules are communicated to responsible resources for necessary actions, approvals in advance for routine as well as critical tasks. The reporting capability includes generation of electronic reports suitable for filing with statutory authorities as well as hard copy reports in a flexible manner, as may be required.

In one embodiment of the system the invention provides for a voyage management module **202** to perform functions including scheduling of voyages and logging of voyage details including ship's position. The logging of voyage details may include retrieving data from various sensors and instruments on board the vessel. The voyage details may additionally comprise bunker details indicating fuel storage, ship-generated waste and bilge. The ship-generated waste details may be required to be in compliance with various regulations that may be dependent on the port of call and the jurisdiction. The voyage details also include cargo details such as description, piece count, weights, and hazard classification details, if applicable. The voyage management module is additionally configured to provide reports of bunker details, departures, noon reports, arrivals and geolocation information of one or more vessels as required.

In one embodiment the invention comprises a crew management module **203** configured to record and maintain a crew database, including background, credentials, tracking of sign-on and sign-off dates, contract data, performance appraisal of crew and administering a promotion system based on the appraisal. The system is also configured to provide search and retrieval of crew availability in conjunction with the planning and scheduling functions, including voyage management as detailed with reference to module **202.** In addition, the crew management module 203 also comprises a training and repatriation module for follow-up actions based on the performance appraisal results.

The purchase module **204** according to one embodiment of the invention comprises an inventory management module operable with an inventory database, a shopping module configured to handle purchase requests and an ordering module. The ordering module queries a vendor database to obtain suitable vendors, who are then sent enquiries. When the offers are received, they are compared and the statement presented to the purchaser. The module includes options to change the mode of purchase to direct, depending on whether the vendor is pre-qualified or if there is a rate-contract in place, with communications and recording of approvals.

The administration module **205** of the invention, in one embodiment comprises a workflow engine configured to administer user privileges for authorizing transactions and approvals within the system. The system is also configured to provide alerts on follow-up tasks according to the workflow.

The system of the invention in one embodiment also comprises a mobile application based on either the Android™ platform or the iOS™ system. The mobile application is configured to bring to a mobile telephone user customized dashboard and alerts including voyage details, and alerts associated with the privileges based on user permission or role. The mobile application therefore enables personnel to effectively participate in the management of the vessel while ensuring adherence to processes, procedures and deadlines.

In one embodiment the invention is a computer program product that is carried in a non-volatile memory for performing functions as substantially described in relation to Fig. 1 to Fig. 6. The program product may be installable in a land based server 101, a vessel based server

### Example 1

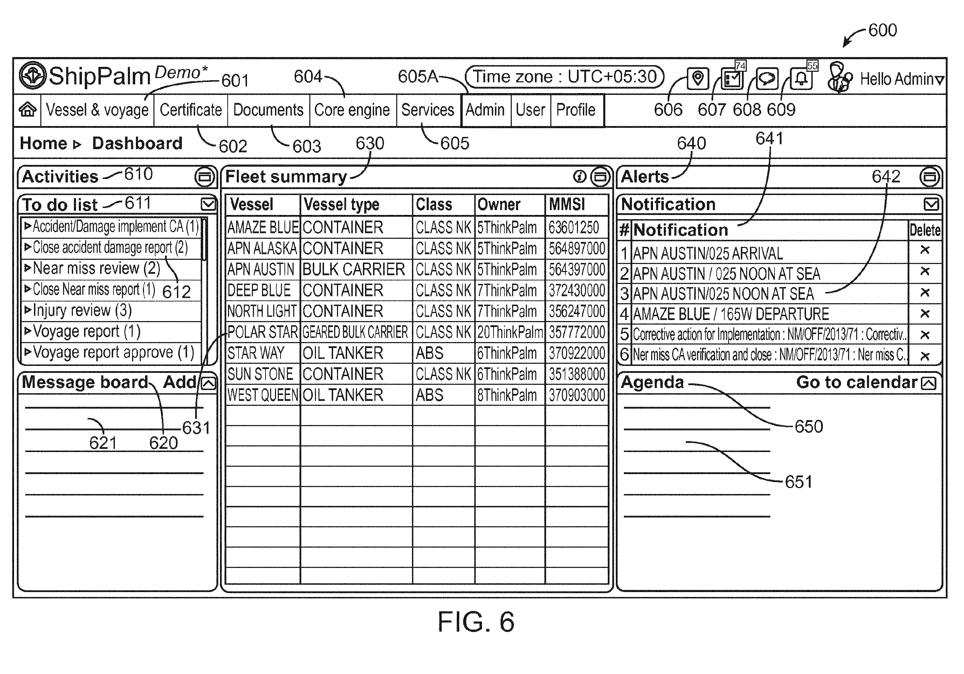

Exemplary implementation of the invention is further illustrated. An example of the instance of the system illustrated in Fig. 1 to Fig. 5 running in the land-based server **101** (Fig. 1) is further illustrated showing screens of the various modules. The typical dashboard **600** of the system illustrated using a land-based server instance is shown in Fig. 6, comprising on the top of the screen drop down menu items Vessel & Voyage **601,** Certificate **602,** Documents **603,** Core Engine **604,** Services **605,** and administrative functions **605A,** through Admin User and Profile tabs. The dashboard provides access to critical information on fleet management with a series of panels including Activities **610,** Message Board **620,** Fleet Summary **630,** Alerts **640** and Agenda **650.**

Activities panel **610** comprises To Do List **611** comprising action items from various modules **201** through **234** illustrated in Fig. 2. As illustrated in Fig. 6, these may comprise corrective actions, voyage reports and review items. Message Board **620** lists notifications and information items **621** from individual vessels. The central Fleet Summary panel **630** lists various vessel names, their type, class, ownership and other details in table **631.** Alerts panel **640** carries notifications regarding events such as arrivals, noon reports, implementation of corrective actions etc. **642** in notification panel **641.**

The top right hand corner of the dashboard **600** in Fig. 6 provides four buttons **606** to **609,** for instant access to information. Button **606** opens a screen showing geolocation of various vessels, while pending activities **607,** messages **608** and notifications **609** are accessible as full screens through the respective buttons. The number of new updates since the last user session is shown overlaid on top of the buttons.

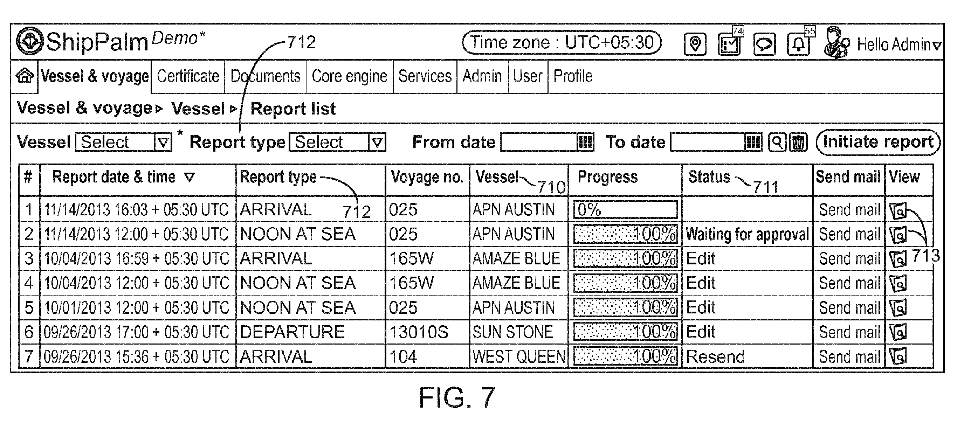

The various functionalities served by the drop down menu items shown in Fig. 6 will now be illustrated with reference to Fig. 7 to Fig. 12. The Vessel & Voyage report list **611** (Fig. 6) is shown in Fig. 7, wherein the server instance listing reports from various vessels **710** with status **711** and provision to filter by date or report type. The reports pertain to types **712** such as arrival, noon report, departure etc. and link **713** to download for viewing.

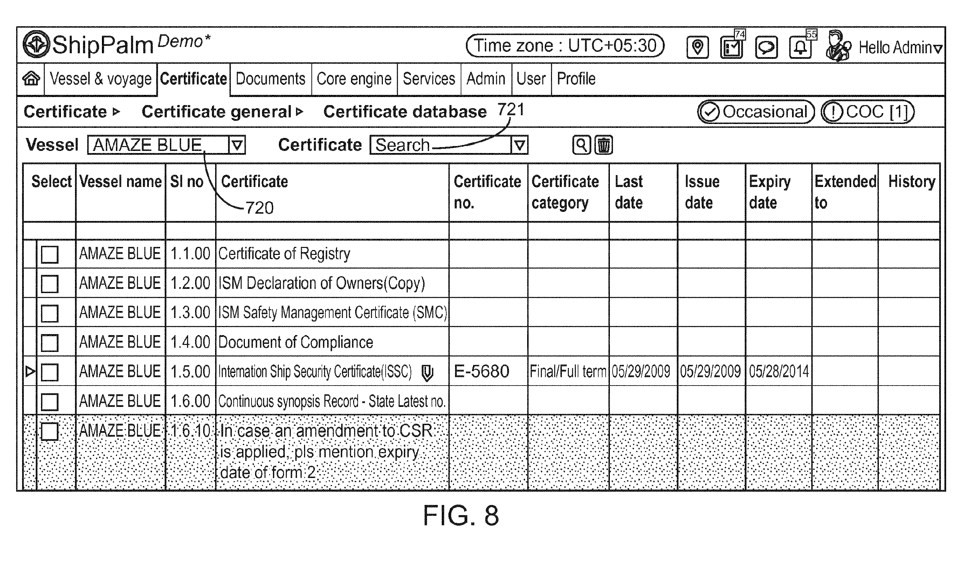

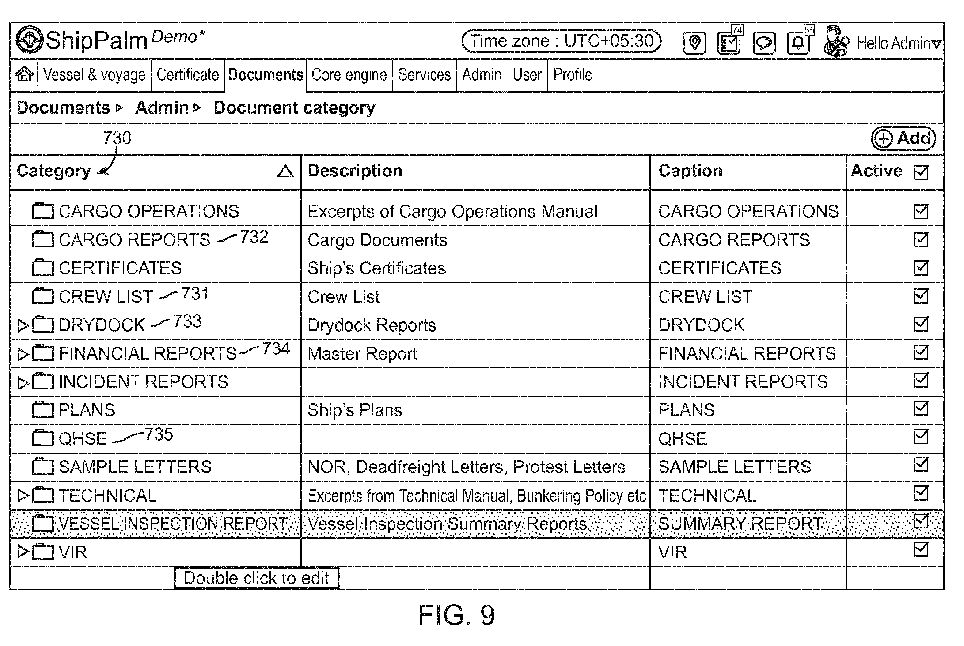

The certificate management component on the server version is shown in Fig. 8, where certificates **602** applicable to a particular vessel could be viewed along with issue, expiry and other important data required for management of renewals from vessel dropdown **720.** Alternatively, the certificates could be searched using the certificate type box **721.** The document repository **730** accessible through the Documents dropdown **603** of the main screen is shown in Fig. 9, which leads to folders pertaining to various types of reports including crew lists **731,** cargo reports **732,** drydock **733,** financial reports **734** and QHSE reports **735** for the vessels being managed by the system.

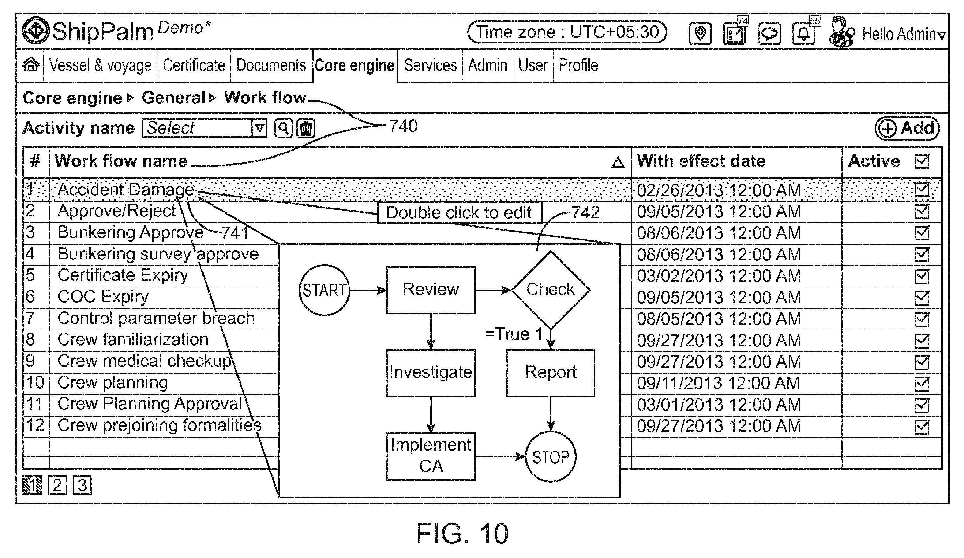

The core workflow components from the Core Engine drop down **604** is illustrated in Fig. 10, where the workflow features or settings **740** for each process is defined. An example definition **742** for Accident Damage assessment **741** is shown in Fig. 10. The workflow definitions are editable so that required functionality could be built into the application. The workflow settings are configured along with user privileges so that tasks relating to the various functions of the system are accomplished effectively, as already explained with reference to Fig. 4 relating to functioning of the workflow system.

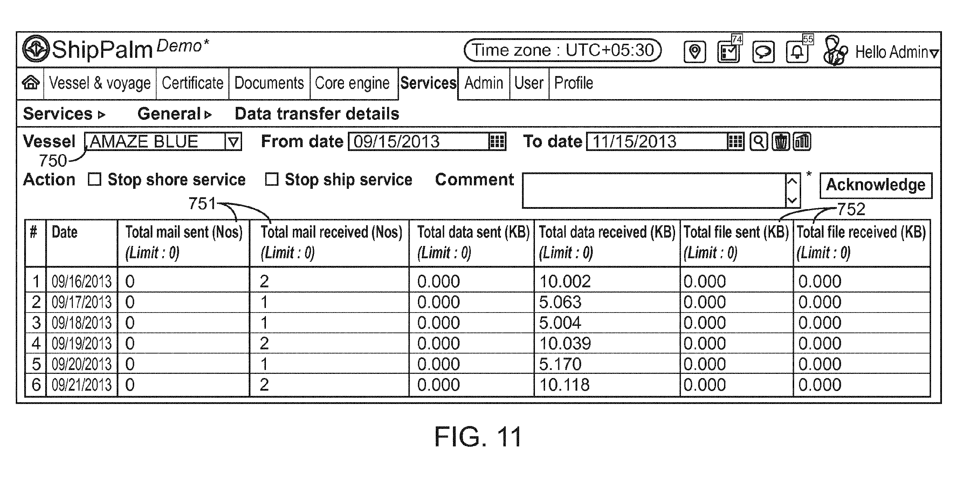

The communication log on server **101** pertaining to a vessel is viewable through the Services drop down **605,** as shown in Fig. 11. The vessel drop down **750** allows viewing of mails **751** and file attachments **752** sent and received by date, number, data size, etc. for each vessel selected.

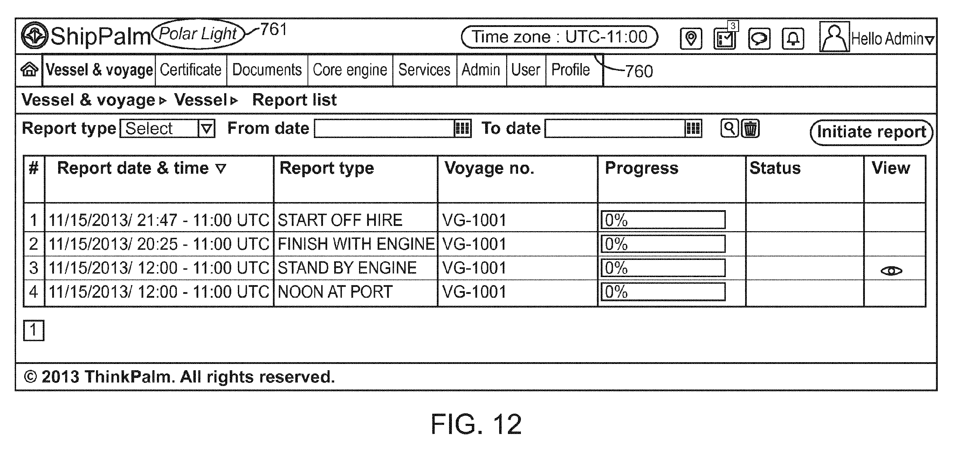

A sample screen on an instance of the system of the invention running on a vessel **110** (Fig. 1) is shown in Fig. 12. The menu items **760** in Fig. 12 correspond to those shown in relation to the server version in Fig. 6, except for Core Engine **604,** which only is available on the server instance as illustrated in Fig. 6-11. The Vessel & Voyage report list in Fig. 12 shows reports pertaining to the specific vessel on which the instance of the system is running, as shown in top left hand corner at location **761.** The functionality of all other menu items are the same as illustrated in Fig. 6-9 and Fig. 11, with reference to retrieving and accessing various reports and logs.

Example 1 has illustrated the system of the invention through exemplary implementation via screens detailing the functionalities and capabilities of the invention. However, the example screens shown are by way of exemplary illustration and should not be construed as exhaustive in relation to the full functional capabilities of the system of the invention as claimed further.

While the invention has been disclosed with reference to certain embodiments, it will be understood by those skilled in the art that various changes may be made and equivalents may be substituted without departing from the scope of the invention. In addition, many modifications may be made to adapt to a particular situation or material the teachings of the invention without departing from its scope.

## Claims

1. A system for management of operations of one or more vessels, comprising:
a land-based server coupled to one or more business databases, wherein the business databases comprise business data including financial data and inventory data;
a vessel-based server coupled to one or more sensor modules configured to collect voyage related data; and
a contextual engine coupled to the land-based server and the vessel-based server via a network, wherein the contextual engine is configured to synchronize the voyage data and the business data; and wherein the contextual engine is configured to produce a context specific management framework using the synchronized voyage data and the business data.

2. The system of claim 1, further comprising a regulation server coupled to one or more regulation databases comprising vessel regulation data, docking data and vessel certification data.

3. The system of claim 1, wherein the management framework is presented as a dashboard.

4. The system of claim 1, the vessel-based and land-based servers further comprising workflow-based modules for management of operations of a vessel including:
a quality, health, safety and environmental compliance module;
a voyage management module;
a crew management module;
a purchase and inventory management module; and
an administration module, wherein,
the modules are configured to provide workflow based functions and communication through a network.

5. The system of claim 4 wherein the communication is effected via a satellite network, a WIFI network, a mobile telephone network or a wired data network.

6. The system of claim 1, wherein the land-based server further comprises:
a finance module;
a commercial and logistics module;
a document management system; and,
a planned maintenance system, wherein the modules are configured for managing a fleet of vessels.

7. The system of claim 4, wherein the quality, health, safety and environmental compliance module is configured to perform functions comprising:
recording of accidents;
scheduling and recording of audits;
scheduling and reviewing of drills;
scheduling and conducting investigations, including reviewing and implementing corrective actions thereafter;
scheduling and communicating of meetings and capturing minutes thereof;
scheduling of training; and
risk assessment and scenario analysis.

8. The system of claim 7, wherein the quality, health, safety and environmental compliance module, is further configured to perform functions including generating reporting and communication corresponding to each function.

9. The system of claim 4, wherein the voyage module is configured to perform the functions of:
scheduling of voyages;
logging of voyage details including ship's position, bunker details, garbage details and cargo details;
reporting of bunker details, departures, noon reports and arrivals; and
geo-location of one or more ships.

10. The system of claim 4, wherein the crew management module is configured to perform the functions of:
recording and maintaining a crew database;
tracking of sign-on and sign-off dates of crew in the database;
searching and retrieving crew availability data;
maintenance of crew contract data;
recording performance appraisal of crew; and
administering a promotion system based on the appraisal.

11. The system of claim 10 wherein the crew management module further comprises:
a training and repatriation module for follow up actions based on the appraisal data.

12. The system of claim 4, wherein the purchase module comprises:
a shopping module configured to handle purchase requests;
an inventory management module operable with the inventory database; and
an ordering module operable with a vendor database to send enquiries, receive offers and prepare comparative statements.

13. The system of claim 4, the administration module further comprising:
a workflow engine configured to administer user privileges for authorizing transactions and approvals within the system; and
to provide alerts for follow-up of incomplete tasks according to the workflow.

14. The system of claim 5 further comprising a mobile application configured to provide to a user:
voyage related details;
alerts based on role of the user.

15. A computer program product with program code for management of operations of one or more vessels, comprising:
a contextual engine coupled to a land-based server and a vessel-based server via a network, the land-based server coupled to one or more business databases wherein the business databases comprise business data including financial data and inventory data;
the vessel-based server coupled to one or more sensor modules configured to collect voyage related data;
the contextual engine being configured to:
synchronize data between the land based server and the vessel-based server; and
produce a context specific management framework using the synchronized voyage data and the business data.

16. The computer program product of claim 15, further comprising workflow-based modules for management of operations of a vessel including:
a quality, health, safety and environmental compliance module;
a voyage management module;
a crew management module;
a purchase and inventory management module; and
an administration module, wherein,
the modules are configured to provide workflow based functions and communication through a network.

17. The computer program product of claim 16 wherein the communication is effected via a satellite network, a WIFI network, a mobile telephone network or a wired data network.
